# EUROPEAN PATENT APPLICATION

(11) **EP 1 118 591 A1**
(43) Date of publication of application: **25.07.2001**
(21) Application number: 00128530.3
(22) Date of filing: 27.12.2000
(51) Int. Cl.: C03B 33/07

(54) **Method and apparatus for processing sheets of laminated glass**

(30) Priority: 14.01.2000 IT TO200037
(71) Applicant: BOTTERO S.p.A., 12010 Cuneo (IT)
(72) Inventor: Mattio, Roberto, 12026 Piasco (IT); Aimar, Giacomo, 12010 Cervasca (IT)
(74) Representative: Eccetto, Mauro

(57) **Abstract**

A method and machine (1) for processing sheets (2) of laminated glass, whereby a sheet (2) of glass, as it is fed in a given traveling direction (A) on a supporting surface (7) having a cutting opening (5) crosswise to the traveling direction (A), is raised with respect to the supporting surface (7) by an auxiliary supporting device (20) movable through the cutting opening (5), so as to enable the edges of the sheet (2) to get past a downstream edge of the cutting opening (5) in the traveling direction (A).

## Description

The present invention relates to a method of processing sheets of laminated glass.

As is known, when processing a sheet of laminated glass, the sheet is fed in a given traveling direction along a supporting surface having a cutting opening substantially crosswise to the traveling direction and engaged by a cutting tool, which normally runs along the cutting opening to form one or more notch lines on the sheet.

In the course of the above operations, the leading edge of the sheet may knock against the downstream edge, in the sheet traveling direction, of the cutting opening, due to downward flexing of the part of the sheet gradually projecting over the cutting opening. In most cases, this results in problems such as breakage or chipping of the sheet, and at any rate in the sheet shifting with respect to the feed assembly, thus compromising all the follow-up processing operations on the sheet and hence the geometrical and dimensional accuracy of the finished articles.

It is an object of the present invention to provide a method of processing sheets of glass, which is straightforward and cheap to implement and which at the same time provides for eliminating the aforementioned drawbacks.

According to the present invention, there is provided a method of processing sheets of laminated glass, wherein a sheet of glass is fed in a given traveling direction and along a supporting surface having a cutting opening substantially crosswise to the traveling direction and parallel to a notching direction of the sheet, and is subjected, at said opening, to at least one cutting operation by means of cutting means traveling along said cutting opening; the method being characterized by comprising the step of temporarily moving at least part of said sheet into a raised position with respect to the supporting surface by means of lifting means movable through the cutting opening.

Preferably, in the method described above, the sheet is raised as the sheet is fed in said traveling direction, and is kept raised at least until a leading edge of the sheet in said traveling direction gets past a downstream edge of the cutting opening in the traveling direction.

Preferably, the method described above comprises the further step of imparting to said sheet, when in said raised position, a movement crosswise along said cutting opening.

The present invention also relates to a machine for processing sheets of laminated glass.

According to the present invention, there is provided a machine for processing sheets of laminated glass, the machine comprising a supporting surface for at least one said sheet, and feeding means for feeding said sheet along said supporting surface in a given traveling direction; said supporting surface having a cutting opening substantially crosswise to said traveling direction; and cutting means being located at said opening and being movable in a notching direction parallel to said cutting opening to make a notch line on said sheet; the machine being characterized by also comprising lifting means movable through said opening to and from a work position above said supporting surface.

A non-limiting embodiment of the invention will be described by way of example with reference to the accompanying drawings, in which:
Figure 1 shows a schematic side view, with parts removed for clarity, of a machine for processing sheets of glass in accordance with the teachings of the present invention;
Figure 2 shows a partly sectioned, larger-scale view, with parts removed for clarity, of a detail of the Figure 1 machine in a particular operating position;
Figure 3 shows the same view as in Figure 2, of a variation of a detail in Figure 2.

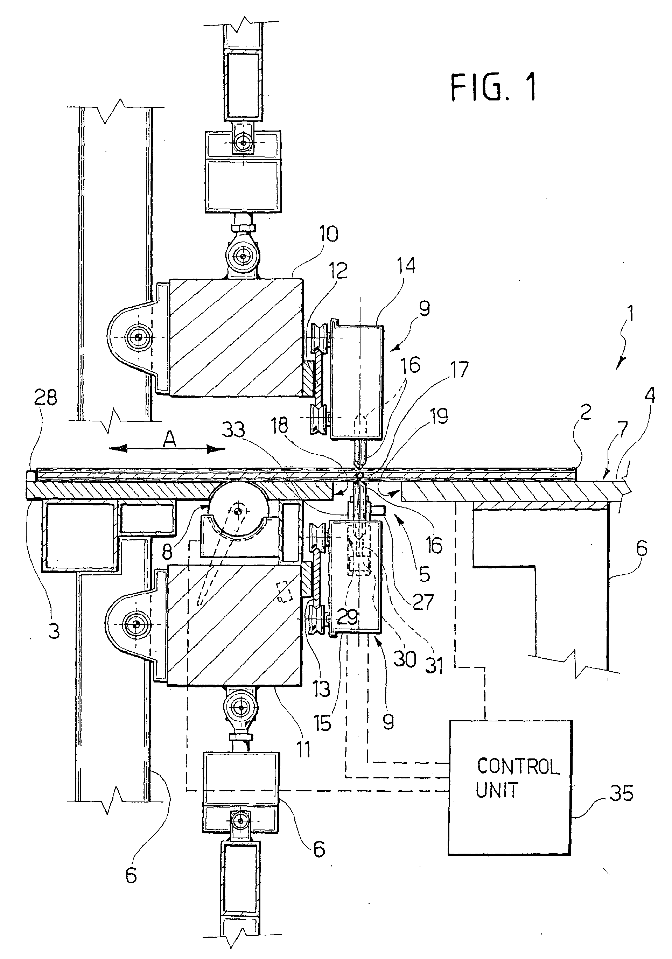

Number 1 in Figure 1 indicates as a whole a machine for processing a sheet 2 of laminated glass.

Machine 1 comprises two side by side, coplanar tables 3 and 4, which are separated by a transverse opening 5 - in the example shown, a cutting opening 5 - are supported by a fixed frame 6, and define a supporting surface 7 for sheet 2. Machine 1 also comprises a known feed device 8 for feeding sheet 2 along supporting surface 7 in a given traveling direction A crosswise to opening 5; and a known cutting device 9 located at opening 5.

Cutting device 9 is supported by both a top beam 10 located over supporting surface 7 and fitted to frame 6 so as to move, with respect to frame 6, to and from the supporting surface, and by a bottom beam 11 located beneath supporting surface 7, and which is positioned facing and parallel to beam 10 and to opening 5, and is fitted to frame 6 to move to and from supporting surface 7.

Cutting device 9 comprises two facing guides 12 and 13 integral with beams 10 and 11 respectively, and parallel to each other and to opening 5; and two known powered cutting carriages 14 and 15, which are fitted to guides 12 and 13 respectively to run in a notching direction 17 parallel to opening 5 and perpendicular to direction A, and are positioned facing each other and opening 5.

Each carriage 14, 15 supports a notching tool 16, which cooperates with the notching tool 16 on the other carriage 15, 14 to form, on the opposite surfaces of sheet 2, two notch lines parallel to direction 17. More specifically, each notching tool 16 extends through opening 5 and between two surfaces 18 and 19, which are parallel to each other and perpendicular to surface 7, and respectively define tables 3 and 4 and the opposite edges of opening 5.

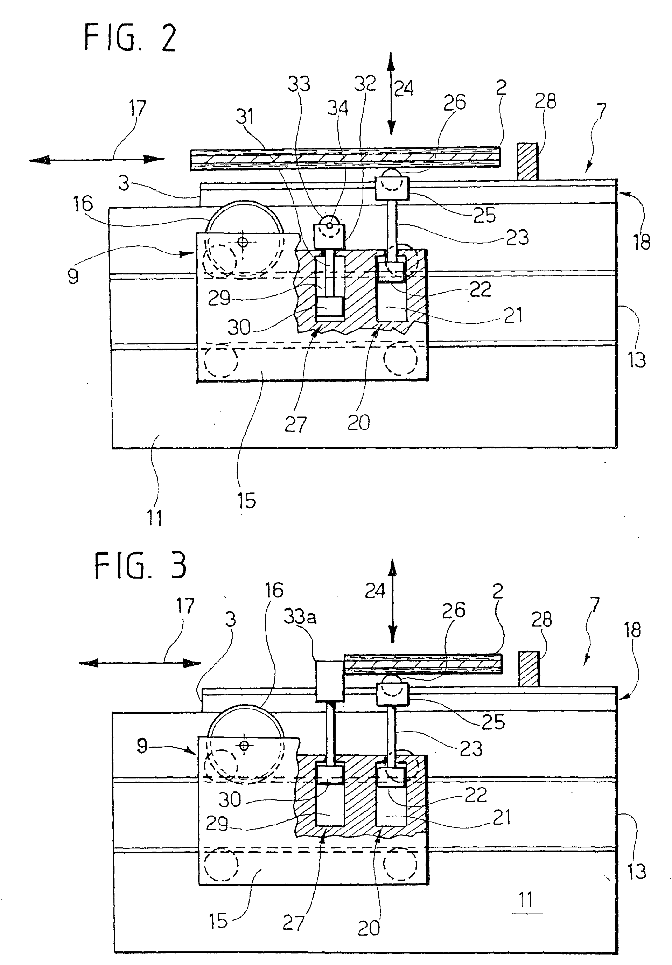

With reference to Figure 2, carriage 15 incorporates a lifting device - in the example shown, an auxiliary supporting device 20 - defined by a pneumatic linear actuating device, which comprises a chamber 21 formed inside carriage 15 and housing a piston 22 moved along chamber 21 by a pressurized fluid supplied by a known hydraulic circuit (not shown) to move an output rod 23 back and forth in a direction 24 perpendicular to supporting surface 7. Rod 23 is fitted integrally on its free end with a cup-shaped body 25 positioned with its concavity facing upwards and defining a hemispherical seat for a ball 26, which, when rod 23 is moved axially, moves through opening 5 and between a rest position (not shown) in which ball 26 is positioned entirely beneath supporting surface 7, and a work position (shown in Figure 2) in which at least part of ball 26 projects above supporting surface 7.

Carriage 15 also incorporates a positioning device 27, which is interposed between relative tool 16 and auxiliary supporting device 20, and provides for moving sheet 2, parallel to direction 17, onto a lateral stop 28 located on supporting surface 7 and extending perpendicularly to direction 17. Positioning device 27 comprises a pneumatic jack, which comprises a chamber 29 formed inside carriage 15 and housing a piston 30 moved along chamber 29 by a pressurized fluid supplied by a known hydraulic circuit (not shown) to move an output rod 31 back and forth in direction 24. Rod 31 is fitted integrally on its free end with a fork 32, which supports for rotation a powered roller 33 having a rotation pin 34 crosswise to cutting direction 17 and parallel to supporting surface 7.

When rod 31 is moved, roller 33 is moved through opening 5 between a rest position (Figure 2) in which roller 33 is located entirely beneath supporting surface 7, and a work position (not shown) in which at least part of roller 33 projects above supporting surface 7. In the Figure 3 variation, fork 32 and powered roller 33 are replaced by a push body 33a, e.g. a vertical-axis roller, which is carried by rod 31 and contacts a lateral wall of sheet 2 to push sheet 2 onto stop 28.

Carriages 14 and 15, cutting device 9, auxiliary supporting device 20 and positioning device 27 are controlled by a control unit 35 according to a sheet 2 notching program.

In actual use, when sheet 2, on being fed into position in direction A on supporting surface 7, is positioned with its leading edge over opening 5, control unit 35 sends a control signal to powered carriage 15 to so position carriage 15 as to bring auxiliary supporting device 20 directly beneath sheet 2.

Once carriage 15 is positioned beneath the sheet, control unit 35 activates auxiliary supporting device 20 to lift sheet 2 with respect to supporting surface 7 and so enable sheet 2 to continue moving into position.

When the leading edge of sheet 2 gets past the downstream edge of opening 5 in traveling direction A, control unit 35 restores auxiliary supporting device 20 to the rest position so that sheet 2 once more rests completely on supporting surface 7.

Once past opening 5, the positioning of sheet 2 is completed by pushing sheet 2 onto stop 28. This is done by so positioning carriage 15 as to bring positioning device 27 directly beneath sheet 2. Once carriage 15 is positioned, control unit 35 activates positioning device 27 to move roller 33 into the raised work position and lift sheet 2 with respect to supporting surface 7. At this point, control unit 35 activates roller 33 - or carriage 15, if body 33a is substituted for roller 33 - so as to move sheet 2 transversely into contact with lateral stop 28, and then restores positioning device 27 to the rest position to release sheet 2 on supporting surface 7.

As compared with known solutions, machine 1 described therefore provides for correctly feeding and positioning sheets of any shape or size on the supporting surface, with no danger of the sheets being broken or chipped. This is made possible by devices 20 and 27, which, being movable inside opening 5, may be positioned at given selected points to prevent flexing or deformation of the sheet as it starts to move, and can also accompany the sheet throughout the positioning step to prevent the sheet from jamming against the surfaces defining opening 5.

Associating devices 20 and 27 with the bottom cutting carriage on the machine eliminates the need for auxiliary or dedicated supporting and handling assemblies, thus reducing both manufacturing and maintenance cost. Moreover, devices 20 and 27 may be moved along opening 5 using the same controls normally used for controlling the bottom carriage.

Clearly, changes may be made to the machine as described herein without, however, departing from the scope of the accompanying Claims. In particular, device 20 and/or 27 may be replaced with other devices, providing they are capable of cooperating from underneath with the sheet through the opening.

## Claims

1. A method of processing sheets (2) of laminated glass, wherein a sheet (2) of glass is fed in a given traveling direction (A) and along a supporting surface (7) having a cutting opening (5) substantially crosswise to the traveling direction (A) and parallel to a notching direction (17) of the sheet (2), and is subjected, at said opening (5), to at least one notching operation by means of cutting means (9) traveling along said cutting opening (5); the method being characterized by comprising the step of temporarily moving at least part of said sheet (2) into a raised position with respect to the supporting surface (7) by means of lifting means (20) (27) movable through the cutting opening (5).

2. A method as claimed in Claim 1, wherein the sheet (2) is raised as the sheet (2) is fed in said traveling direction (A), and is kept raised at least until a leading edge of the sheet (2) in said traveling direction (A) gets past a downstream edge of the cutting opening (5) in the traveling direction (A).

3. A method as claimed in Claim 1 or 2 and comprising the further step of imparting to said sheet (2) a movement crosswise to said cutting opening (5).

4. A method as claimed in Claim 3, characterized in that the movement of said sheet crosswise to said cutting opening (5) is imparted when the sheet (2) is in said raised position.

5. A method as claimed in Claim 3 or 4, wherein said movement crosswise to said cutting opening terminates upon an edge of the sheet (2) contacting a stop (28) extending along said supporting surface (7) and crosswise to said cutting opening (5).

6. A method as claimed in one of the foregoing Claims, wherein said lifting means (20)(27) are carried by said cutting means (9) and are moved by the cutting means (9) along said cutting opening (5).

7. A machine (1) for processing sheets (2) of laminated glass, the machine (1) comprising a supporting surface (7) for at least one said sheet (2), and feeding means (8) for feeding said sheet (2) along said supporting surface (7) in a given traveling direction (A); said supporting surface (7) having a cutting opening (5) substantially crosswise to said traveling direction (A); and cutting means (9) being located at said opening (5) and being movable in a notching direction (17) parallel to said cutting opening (5) to make a notch line on said sheet (2); the machine being characterized by also comprising lifting means (20)(27) movable through said opening (5) to and from a work position above said supporting surface (7).

8. A machine as claimed in Claim 7, wherein said cutting means (9) comprise a carriage (15) movable along said cutting opening (5) and located beneath the cutting opening (5); said lifting means (20)(27) being carried by said carriage (15).

9. A machine as claimed in Claim 7 or 8, wherein said lifting means (20)(27) comprise a linear actuating device having an output member (23) movable through said cutting opening (5) in a direction (24) crosswise to said supporting surface (7); said output member (23) supporting movably a revolving end body (26) which is brought into contact with said sheet (2).

10. A machine as claimed in Claim 9, wherein said lifting means (20)(27) comprise a further linear actuating device having an output member (31) movable through said cutting opening (5) in a direction (24) crosswise to said supporting surface (7); said output member (31) supporting an actuating member (33; 33a) which is brought into contact with said sheet (2).

11. A machine as claimed in Claim 10, characterized in that said actuating member comprises a roller (33), which is powered to rotate about an axis (34) crosswise to said cutting opening (5) and parallel to said supporting surface (7), and is brought into contact with said sheet (2).
